Europäisches Patentamt

European Patent Office

Office européen des brevets

(19)

(11) Veröffentlichungsnummer: **0 073 886**
**B1**

(12) # EUROPÄISCHE PATENTSCHRIFT

(45) Veröffentlichungstag der Patentschrift:
03.10.84

(51) Int. Cl.³: **F 16 K 11/07, F 16 K 35/04**

(21) Anmeldenummer: **82105495.4**

(22) Anmeldetag: **23.06.82**

(54) **Hydraulisches Steuergerät.**

(30) Priorität: **03.09.81 DE 3134858**

(43) Veröffentlichungstag der Anmeldung:
**16.03.83 Patentblatt 83/11**

(45) Bekanntmachung des Hinweises auf die Patenterteilung:
**03.10.84 Patentblatt 84/40**

(84) Benannte Vertragsstaaten:
**DE FR GB IT**

(56) Entgegenhaltungen:
**DE - B - 1 650 452**
**GB - A - 1 123 164**
**US - A - 2 759 456**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Adams, Heribert, Dipl.-Landwirt, Eigen 34,**
**D-5064 Rösrath (DE)**
Erfinder: **Heinrich, Christian, Raderberger Strasse 117,**
**D-5000 Köln 51 (DE)**
Erfinder: **Willmes, Friedrich, Dipl.-Ing., Bleistrasse 4,**
**D-5042 Erftstadt-Niederberg (DE)**

## Beschreibung

Die Erfindung bezieht sich auf ein hydraulisches Steuergerät mit einem axial in mehrere Schaltstellungen verschiebbaren und mittels einer Rückstellfeder selbsttätig in eine seiner Schaltstellungen zurückgehenden Steuerschieber, der ausserhalb dieser Schaltstellung durch eine in Raststellen eingreifende federbelastete Raste festlegbar ist, die ferner durch ein als Kolben in einer Gehäusebohrung geführtes und über einen angrenzenden Ringraum mit Druckflüssigkeit beaufschlagbares Teil hydraulisch betätigbar ist, wobei der Ringraum über ein Vorsteuerventil mit der zum Verbraucher führenden Pumpendruckleitung in Verbindung steht, die bei Abschaltung des bzw. der Verbraucher druckentlastet ist.

Es ist aus der DE-AS Nr. 1650452 ein Steuergerät der geschilderten Gattung bekanntgeworden, dessen Steuerschieber durch eine federbelastete Raste ausserhalb einer Neutralstellung in zwei Schaltstellungen festlegbar ist. Dabei wird in der einen Schaltstellung einem Verbraucher, beispielsweise einem Hubzylinder, Druckflüssigkeit zugeführt, während in der anderen Schaltstellung Druckflüssigkeit aus dem Hubzylinder abströmen kann. Die Raste ist hydraulisch betätigbar und daher über ein Vorsteuerventil mit der Pumpendruckleitung verbunden. Hierdurch wird erreicht, dass in der erstgenannten rastbaren Schaltstellung die Raste bei Überschreitung eines vorbestimmten Druckes am Verbraucher bzw. am Vorsteuerventil hydraulisch beaufschlagt und entrastet wird, so dass der Steuerschieber dann jeweils selbsttätig in seine Neutralstellung zurückspringt. Bei diesem bekannten Steuergerät ist jedoch eine sog. Schwimmstellung für den Steuerschieber nicht vorgesehen.

Bei Verwendung einer derartigen hydraulischen Raste in einem für doppeltwirkende Hubzylinder od. dgl. geeigneten Steuergerät, das für eine Zusammenfassung mehrerer Steuergeräte zu einer Blockschaltung ausgebildet ist und dessen Steuerschieber ausserdem eine Schwimmstellung für den Hubzylinder aufweist, ergeben sich jedoch Probleme. In Blockschaltungen genannter Art wird nämlich in der Regel die Pumpendruckleitung bei Neutralstellung des Steuerschiebers mit dem Rücklauf verbunden, um die hydraulische Anlage zu entlasten. Wird in diesem Betriebszustand ein nachgeschalteter Verbraucher, z.B. der Kraftheber, eingeschaltet, dann wird die Pumpendruckleitung gegenüber dem Rücklauf gesperrt, und der Druck in der gesamten Leitung steigt entsprechend dem Verbraucherdruck an. Befindet sich dabei eines der dem Kraftheber vorgeschalteten Steuergeräte in Schwimmstellung, dann spricht dessen Vorsteuerventil bei Erreichen des eingestellten Wertes an, so dass dann bei diesem Steuergerät eine unerwünschte Entrastung der Schwimmstellung des Steuerschiebers erfolgt und dieser durch die Rückstellfeder in die Neutralstellung gelangt.

Ausgehend von diesen Erkenntnissen ist es Aufgabe der Erfindung, ein Steuergerät der eingangs umrissenen Gattung dahingehend zu verbessern, dass bei einer Blockschaltung von zumindest zwei solcher Steuergeräte der auf Schwimmstellung eingestellte Steuerschieber des vorgeschalteten Steuergeräts diese Stellung auch dann sicher beibehält, wenn der Druck in der Pumpendruckleitung infolge Zuschaltung eines nachgeschalteten Verbrauchers den Betätigungsdruck des Vorsteuerventils für die hydraulische Raste übersteigt.

Die Aufgabe wird erfindungsgemäss dadurch gelöst, dass der hydraulische Stellweg der Raste gegenüber ihrem gegen Federkraft möglichen Stellweg begrenzt ist und dass am Steuerschieber die Raststellen zum Ein- bzw. Hintergreifen der Raste radial so bemessen sind, dass hyraulisches Auslösen der Raste unabhängig von dem gegen Federkraft möglichen Stellweg nur an den dafür vorgesehenen Raststellen möglich ist.

Durch diese Massnahmen wird erreicht, dass die Raste bei hydraulischer Betätigung einen vorbestimmten Stellweg ausführt, der zum Auslösen der Raste nur aus der dafür vorgesehenen Raststelle bzw. den Raststellen im Steuerschieber führen kann. Hierdurch werden Fehlschaltungen des Steuerschiebers mit Sicherheit vermieden.

In Weiterbildung der Erfindung ist der zur Führung dienende Teil der Raste zylindrisch ausgebildet und hat an seinem hinteren Ende einen Bund, der als Anschlag für eine sowohl auf dem Führungsteil der Raste als auch an der Wandung eines diese umgebenden zylindrischen Raumes anliegende und axial bewegliche Hülse dient, die in Richtung zum Bund vom Ringraum her durch das Vorsteuerventil hydraulisch beaufschlagbar ist und wobei die Hülse für ihre dem Bunde zugewandte Stirnseite einen ortsfesten Anschlag aufweist, der bei Anlage der Hülse eine diese in Längsrichtung durchsetzende Drosselbohrung sperrt.

Bei einer anderen vorteilhaften Ausgestaltung der Erfindung ist die Hülse durch eine von dem beaufschlagbaren Ringraum ausgehende ringförmige Ausnehmung topfförmig ausgebildet. Dabei ist es zweckdienlich, wenn die die Hülse in Längsrichtung durchsetzende Drosselbohrung vom Grund der ringförmigen Ausnehmung zu der dem ortsfesten Anschlag zugewandten Stirnseite der Hülse verläuft. Bei einer konstruktiv vorteilhaften Ausgestaltung der Erfindung ist als Abschluss des die Raste aufnehmenden Raumes im Gehäuse ein von aussen in dieses eingeschraubter topfförmiger Körper vorgesehen, der mit seiner der Hülse zugewandten Ringfläche – die Drosselbohrung der Hülse bei Anlage derselben sperrend – den Anschlag bildet, wobei der Raum im topfförmigen Körper zur Aufnahme der die Raste belastenden Feder sowie zum Eintauchen des flanschseitigen Endes des Raste dient. Hierbei hat es sich als zweckdienlich erwiesen, wenn die Raste bis zum Rastenkopf von einer Längsbohrung durchsetzt ist, durch die der die Feder im topfförmigen Körper enthaltende Raum mittels Querbohrungen im Rastenkopf mit dem Rücklauf zum Vorratsbehälter in Verbindung steht.

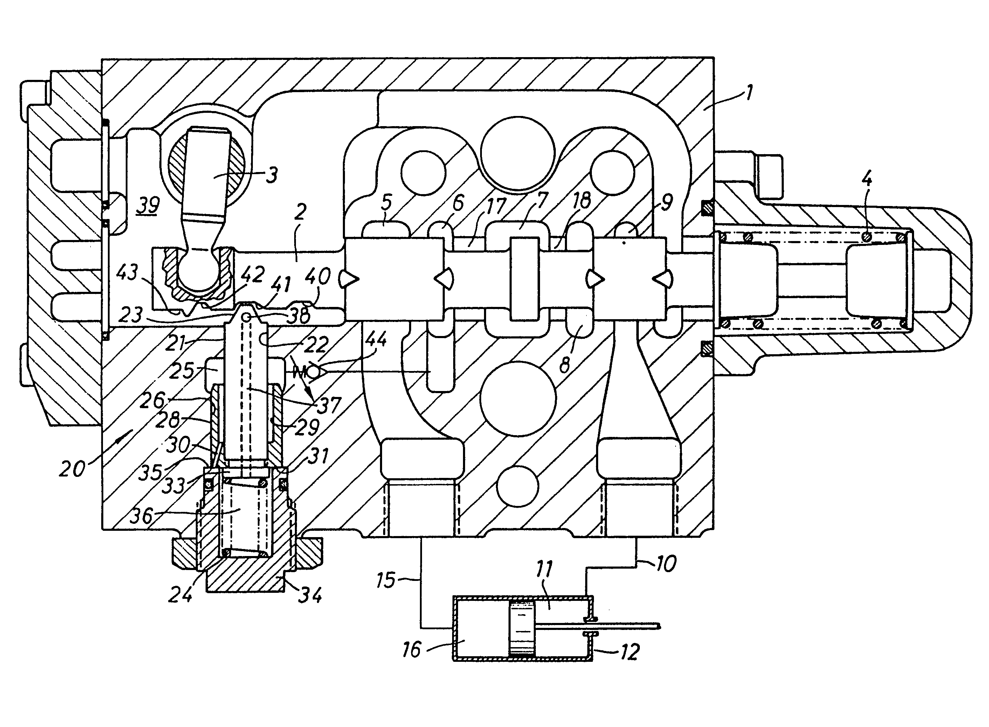

Die Erfindung wird im folgenden anhand eines Ausführungsbeispiels unter Bezugnahme auf die Zeichnung näher beschrieben.

Die einzige Abbildung zeigt einen Querschnitt durch ein hydraulisches Steuergerät mit einer hydraulischen Raste gemäss der Erfindung.

Das gezeigte Steuergerät weist in einem Gehäuse 1 einen Steuerschieber 2 auf, der mittels eines nicht dargestellten Handhebels über einen Mitnehmer 3 gegen die Kraft einer Rückstellfeder 4 aus der gezeigten Neutralstellung N nach links in die Schaltstellung Heben H und nach rechts in Schaltstellungen Senken S sowie Freigang F verschoben werden kann. Im Gehäuse 1 des Steuergeräts sind fünf Ringräume 5, 6, 7, 8 und 9 vorgesehen, von denen die beiden Ringräume 6, 8 an eine nicht dargestellte Druckmittelpumpe angeschlossen sind, während der Ringraum 7 über Rücklaufleitungen mit einem ebenfalls nicht gezeigten Vorratsbehälter für Druckflüssigkeit in Verbindung steht. Der Ringraum 6 ist mittels einer leitung 10 an einen Arbeitsraum 11 eines doppeltwirkenden Hubzylinders 12 angeschlossen. Vom Ringraum 5 führt innerhalb des Gehäuses 1 eine Leitung 15 zum zweiten Arbeitsraum 16 des Hubzylinders 12. Der Schieber 2 hat zwei Ringnuten 17, 18, die bei der gezeigten Neutralstellung des Schiebers 2 die Ringräume 6, 7 bzw. 7, 8 miteinander verbinden. Die Rückstellfeder 4 ist so angeordnet und eingestellt, dass sie den aus der Rastung gelösten Schieber 2 jeweils in die Neutralstellung zurückführt.

Eine Raste 20 ist mit ihrem zylindrischen Teil 21 in einer Gehäusebohrung 22 axial verschiebbar gelagert und liegt mit einem aus der Gehäusebohrung 22 herausragenden prismenförmigen Kopf 23 am Steuerschieber 2 unter der Kraft einer Feder 24 an. An einen den zylindrischen Teil 21 der Raste 20 umhüllenden Ringraum 25 schliesst sich nach unten ein zylindrischer Raum 26 kleineren Durchmessers an, der eine sowohl an seiner Wandung als auch an derjenigen des zylindrischen Teils 21 der Raste 20 axial verschiebbar geführte Hülse 28 aufweist. Die Hülse 28 hat eine vom Ringraum 25 ausgehende ringförmige Ausnehmung 29, durch die die Hülse 28 topfförmig gestaltet ist. Vom Grund der ringförmigen Aussparung 29 der Hülse 28 führt eine Drosselbohrung 30 zur unteren ringförmigen Stirnfläche 31 der Hülse 28. Der zylindrische Teil 21 der Raste 20 hat an seinem dem Kopf 23 abgewandten Ende einen Bund 33, an dem sich bei der gezeigten Arbeitslage der Raste 20 die Hülse 28 abstützt. Als Abschluss des die Hülse 28 aufnehmenden Raumes 266 nach unten dient ein topfförmiger Körper 34, der von aussen in eine entsprechende Bohrung des Gehäuses 1 eingeschraubt ist und an dessen dem Ringraum 26 zugewandten Stirnfläche 35 die Hülse 28 bei der gezeigten Arbeitslage anliegt. Die Drosselbohrung 30 wird bei Anlage der Hülse 28 mit ihrer unteren Stirnfläche 31 an der Stirnfläche 35 des topfförmigen Körpers 34 gesperrt. Die Feder 24 ist im topfförmigen Körper 34 in einem zylindrischen Raum 36 untergebracht, in den der Bund 33 in der gegebenen Arbeitslage mit radialem Spiel eingreift. Vom Raum 36 führt im zylindrischen Teil 21 der Raste 20 eine Längsbohrung 37 bis zum Rastenkopf 23 und ist hier durch Radialbohrungen 38 mit einem Raum 39 verbunden, der seinerseits mit dem Rücklauf zum Vorratsbehälter für Druckflüssigkeit in Verbindung steht. Im Steuerschieber 2 sind im Bereich der Raste 20 vier Raststellen 40, 41, 42, 43 vorgesehen, die zum Ein- bzw. Hintergreifen des Rastenkopfes 23 dienen. Bei Einrastung des Steuerschiebers 2 in die Raststelle 40 wird dem Arbeitsraum 16 des Hubzylinders 12 Druckflüssigkeit zugeführt, während der Arbeitsraum 11 durch die Leitung 10 mit dem Rücklauf in Verbindung steht. In der Raststelle 41 befindet sich der Steuerschieber 2 in der gezeigten Neutralstellung, während der Steuerschieber 2 in der Rastung bei 42 den Arbeitsraum 11 des Hubzylinders 12 mit der Druckflüssigkeitspumpe sowie den Arbeitsraum 16 mit dem Rücklauf verbindet. Befindet sich dagegen der Steuerschieber 2 in der mit 43 bezeichneten Raststelle, dann ist dieser auf Schwimmstellung F eingestellt, wobei beide Arbeitsräume 11, 16 des Hubzylinders 12 sowohl miteinander als auch mit dem Rücklauf zum Vorratsbehälter verbunden sind. Der Ringraum 25 der Raste 20 steht ständig über ein einstellbares Vorsteuerventil 44 mit dem Ringraum 6 des Steuerschiebers in Verbindung.

Bei Eingreifen des Steuerschiebers 2 in die Raststelle 40 wird dieser so eingestellt, dass einerseits durch eine Verbindung der Ringräume 5, 6 dem Arbeitsraum 16 des Hubzylinders 12 Druckmittel zugeführt wird. Andererseits wird der Arbeitsraum 11 des Hubzylinders 12 durch Verbindung des Ringraumes 9 entlastet, so dass der Kolben im Hubzylinder 12 infolge der Zuführung von Druckflüssigkeit in den Arbeitsraum 16 nach rechts verschoben wird. Beim Eingreifen der Raste 20 in die Raststelle 40 wird mit dem axialen Verschieben des zylindrischen teils 21 durch die Feder 24 zum Steuerschieber 2 hin auch die Hülse 28 axial verschoben, so dass durch Abheben deren Stirnfläche 31 von der Stirnfläche 35 des topfförmigen Teils 34 eine Verbindung des Ringraumes 25 über die Drosselbohrung 30 zum Raum 36 hergestellt wird. In dieser Raststellung wird der Steuerschieber 2 durch die Raste 20 selbsttätig gehalten, bis nach Ausführung eines Arbeitsvorganges und entsprechendem Druckanstieg im Arbeitsraum 16 des Hubzylinders 12 bzw. im Ringraum 6 des Gehäuses dieser Druck über das Vorsteuerventil 44 auch im Ringraum 25 zur Wirkung kommt, so dass der Druck die Hülse 28 und mit dieser auch den zylindrischen Teil 21 gegen die Kraft der Feder 24 verschiebt. Damit wird der Steuerschieber 2 entrastet und springt infolge der Kraft der Feder 4 in die gezeigte Neutralstellung zurück.

Die selbsttätige Entrastung des Steuerschiebers 2 wird auch dann wirksam, wenn die Raste 20 in die Raststelle 42 eingreift. Hierbei wird infolge der Verbindung des Ringraumes 5 mit dem Rücklauf sowie des Ringraumes 9 mit dem pumpenseitigen Ringraum 8 der Arbeitsraum 11 des Hubzylinders 12 mit Drückflüssigkeit beaufschlagt, während der Arbeitsraum 16 entlastet wird. Nach einem vorbestimmten Druckanstieg in der Pumpendruckleitung (Ringraum 6) und nach dem Öffnen des Vorschaltventils 44 wird dann bei entsprechender Beaufschlagung des Ringraumes 25 die Raste 20 in beschriebener Weise entgegen der einwirkenden Federkraft bewegt.

Befindet sich dagegen der Steuerschieber 2 in der Schwimmstellung, dann greift die Raste 20 mit ihrem Kopfe 23 an der Raststelle 43 am Steuerschieber 2 an. Bei dieser Arbeitsstellung der Raste 20 liegt die Hülse 28 mit ihrer Stirnseite 31 an der Stirnseite 35 des topfförmigen Teils 34 an, während das zylindrische Teil 21 gegenüber der Hülse 28 um einen geringen Betrag zur Feder 24 hin verschoben ist. Bei dieser Einstellung der Raste 20 ist eine hydraulische Betätigung derselben nicht möglich, so dass eine unerwünschte. Entrastung des Steuerschiebers 2 selbst bei einem hohen Druckanstieg in der Pumpendruckleitung infolge Zuschaltung eines anderen nachgeschalteten Verbrauchers ausgeschlossen ist. Die Hülse 28 liegt dabei stirnseitig am Körper 34 an, und die Drosselbohrung 30 ist verschlossen. Das Austreten eines Teilstromes über das offene Ventil 44 wird somit verhindert.

## Patentansprüche

1. Hydraulisches Steuergerät mit einem axial in mehrere Schaltstellungen (H, N, S, F) verschiebbaren und mittels einer Rückstellfeder (4) selbsttätig in eine seiner Schaltstellungen zurückgehenden Steuerschieber (2), der ausserhalb dieser Schaltstellung durch eine in Raststellen (40, 41, 42, 43) eingreifende federbelastete Raste (20) festlegbar ist, die ferner durch ein als Kolben in einer Gehäusebohrung (26) geführtes und über einen angrenzenden Ringraum (25) mit Druckflüssigkeit beaufschlagbares Teil (28) hydraulisch betätigbar ist, wobei der Ringraum (25) über ein Vorsteuèrventil (44) mit der zum Verbraucher (11) führenden Pumpendruckleitung in Verbindung steht, die bei Abschaltung des bzw. der Verbraucher druckentlastet ist, dadurch gekennzeichnet, dass der hydraulische Stellweg der Raste (20) gegenüber ihrem gegen Federkraft möglichen Stellweg begrenzt ist und dass am Steuerschieber (2) die Raststellen (40 bis 43) zum Ein- bzw. Hintergreifen der Raste (20) radial so bemessen sind, dass ein hydraulisches Auslösen der Raste (20) unabhängig von dem gegen Federkraft möglichen Stellweg nur an den dafür vorgesehenen Raststellen (40, 42) möglich ist.

2. Steuergerät nach Anspruch 1, dadurch gekennzeichnet, dass der zur Führung dienende Teil (21) der Raste (20) zylindrisch ausgebildet ist und an seinem hinteren Ende einen Bund (33) hat, der als Anschlag für eine sowohl auf dem Führungsteil (21) der Raste (20) als auch an der Wandung eines diese umgebenden zylindrischen Raumes (26) anliegende und axial bewegliche Hülse (28) dient, die in Richtung zum Bund (33) vom Ringraum (26) her durch das Vorsteuerventil (44) hydraulisch beaufschlagbar ist und dass die Hülse (28) für ihre dem Bund (33) zugewandte Stirnseite (31) einen ortsfesten Anschlag (35) aufweist, der bei Anlage der Hülse (28) eine diese in Längsrichtung durchsetzende Drosselbohrung (30) sperrt.

3. Steuergerät nach den Ansprüchen 1 und 2, dadurch gekennzeichnet, dass die Hülse (28) durch eine von dem beaufschlagbaren Ringraum (25) ausgehende ringförmige Ausnehmung (29) topfförmig ausgebildet ist.

4. Steuergerät nach den Ansprüchen 1 bis 3, dadurch gekennzeichnet, dass die die Hülse (28) in Längsrichtung durchsetzende Drosselbohrung (30) vom Grund der ringförmigen Ausnehmung (29) zu der dem ortsfesten Anschlag (35) zugewandten Stirnseite (31) der Hülse (28) verläuft.

5. Steuergerät nach einem der vorhergehenden Ansprüche, dadurch gekennzeichnet, dass als Abschluss des die Raste (20) aufnehmenden Raumes (26) im Gehäuse (1) ein von aussen in dieses eingeschraubter topfförmiger Körper (34) vorgesehen ist, der mit seiner der Hülse (28) zugewandten Ringfläche (35) den die Drosselbohrung (30) der Hülse (28) bei Anlage derselben sperrenden Anschlag bildet und dass der Raum (36) im topfförmigen Körper (34) zur Aufnahme der die Raste (20) belastenden Feder (24) sowie zum Eintauchen des flanschseitigen Endes der Raste (20) dient.

6. Steuergerät nach einem der vorhergehenden Ansprüche, dadurch gekennzeichnet, dass die Raste (20) bis zum Rastenkopf (23) von einer Längsbohrung (37) durchsetzt ist, durch die der die Feder (24) im topfförmigen Körper (34) enthaltende Raum (36) mittels Querbohrungen (38) im Rastenkopf (23) mit dem Rücklauf (39) zum Vorratsbehälter in Verbindung steht.

## Claims

1. Hydraulic control apparatus comprising a control slide (2) which can be moved axially into a plurality of switching positions (H, N, S, F) and returned automatically into one of its switching positions by means of a return spring (4), which control slide can be immobilized, outside this one switching position, by a spring-loaded detent (20) engaging in stop locations (40, 41, 42, 43), which detent can be also hydraulically actuated by a part (28) guided in the manner of a piston in a housing bore (26) and acted upon by pressurized fluid by way of an adjacent annular chamber (25), the annular chamber (25) communicating, by way of a servo-valve (44), with the pump pressure pipe that leads to the consumer unit (11) and is relieved of pressure when the consumer unit or units is or are switched off, characterized in that the hydraulic regulating distance of the detent (20) is limited as compared with its possible regulating distance when overcoming spring force, and in that, on the control slide (2), the stop locations (40 to 43) in or behind which the detent (20) engages are of such radial dimension that hydraulic release of the detent (20), independently of the regulating pistons, possible by overcoming the spring force, can be achieved only at the stop locations (40, 42) provided for the purpose.

2. Control apparatus according to Claim 1, characterized in that the part (21) of the detent (20) that acts as a guide is of cylindrical shape and, at its rear end, has a flange (33) which acts as a stop for an axially displaceable sleeve (28), which bears on the guide part (21) of the detent (20) as well as on the wall of a cylindrical chamber (26) surrounding the detent, which sleeve can be hydraulically loaded by the servo-valve (44) in the direction towards the flange (33) and from the annular chamber (26), and in that the sleeve (28) comprises a stop (35) of fixed location for its end face (31) presented to the flange (33), which stop, upon contact of the sleeve (28), closes a throttle bore (30) extending through the sleeve in the longitudinal direction.

3. Control apparatus according to Claims 1 and 2, characterized in that the sleeve (28) is formed as a cup by means of a circular recess (29) extending from the loadable annular chamber (25).

4. Control apparatus according to Claims 1 to 3, characterized in that the throttle bore (30), extending through the sleeve (28) in the longitudinal direction, runs from the base of the circular recess (29) to that end face (31) of the sleeve (28) that is presented to the stop (25) of fixed location.

5. Control apparatus according to one of the preceding Claims, characterized in that, as a closure means for the chamber (26) in the housing (1) that accommodates the detent (20), a cup-like body (34) is provided, which can be screwed into the housing from the exterior and which, by means of its annular face (35) presented to the sleeve (28), forms the stop which closes off the throttle bore (30) of the sleeve (28) when the latter is contacted, and in that the chamber (36) in the cup-shaped body (34) serves to accommodate the spring (24) loading the detent (20) as well as to permit downward movement of the flange-side end of the detent (20).

6. Control apparatus according to one of the preceding Claims, characterized in that a longitudinal bore (37) extends through the detent (20) as far as the head (23) thereof, through which bore the space (36) containing the spring (24) in the cup-shaped body (34) communicates with the return passage (39) to the supply container by means of transverse bores (38) in the head (23) of the detent.

**Revendications**

1. Appareil hydraulique de contrôle, avec un piston de commande (2) susceptible d'être déplacé axialement dans plusieurs positions de commutation (H, N, S, F) et revenant automatiquement dans une de ses positions de commutation grâce à un ressort de rappel (4), et qui, en dehors de cette position de commutation, est susceptible d'être fixé par un cran d'arrêt (20) sollicité par un ressort et venant en prise en des points d'arrêt (40, 41, 42, 43), ce cran d'arrêt étant en outre susceptible d'être actionné hydrauliquement par une pièce (28) guidée en jouant le rôle d'un piston dans un alésage (26) du boîtier et sollicitée par un liquide sous pression par l'intermédiaire d'un espace annulaire adjacent (25), cet espace annulaire (25) étant en communication, par l'intermédiaire d'une soupape de précommande (44), avec la canalisation de refoulement de la pompe aboutissant au dispositif utilisateur (11), cette canalisation étant mise hors pression lors de la mise en circuit du ou des dispositifs utilisateurs, appareil caractérisé en ce que la course hydraulique de réglage du cran d'arrêt (20) est limitée par rapport à sa course de réglage possible contre l'action du ressort, et que sur le tiroir de commande (2) les points d'arrêt (40 à 43), permettant l'entrée en prise dans ou à l'arrière de ces points d'arrêt du cran d'arrêt (20), sont dimensionnés radialement de façon qu'un déclenchement hydraulique de ce cran d'arrêt (20), indépendamment de la course de réglage possible contre l'action du ressort, ne peut s'effectuer qu'aux points d'arrêt (40, 42) prévus à cet effet.

2. Appareil de contrôle selon la revendication 1, caractérisé en ce que la partie (21) servant au guidage du cran d'arrêt (20) est de forme cylindrique et comporte à son extrémité arrière un bandeau (33) servant de butée pour une douille (28), mobile axialement et s'appliquant aussi bien sur la partie de guidage (21) du cran d'arrêt (20) que sur la paroi d'un espace cylindrique (26) entourant cette partie de guidage, cette douille étant susceptible d'être sollicitée hydrauliquement par la soupape de précommande (44) à partir de l'espace annulaire (26) en direction du bandeau (33), tandis que la douille (28) comporte, pour sa face frontale (31) tournée vers le bandeau (33), une butée fixe (35) qui, lorsque la douille (28) vient s'y appliquer, ferme un perçage d'étranglement (30) traversant cette douille en direction longitudinale.

3. Appareil de contrôle selon les revendications 1 et 2, caractérisé en ce que la douille (28) revêt une forme de cuvette du fait d'un évidement annulaire (29) partant de l'espace annulaire (25) susceptible d'être sollicité par le liquide sous pression.

4. Appareil de contrôle selon les revendications 1 à 3, caractérisé en ce que le perçage d'étranglement (30) traversant la douille (28) en direction longitudinale s'étend du fond de l'évidement annulaire (29) jusqu'à la face frontale (31), tournée vers la butée fixe (35), de la douille (28).

5. Appareil de contrôle selon l'une des revendications précédentes, caractérisé en ce que, comme fermeture de l'espace (26) recevant le cran d'arrêt (20) dans le boîtier (1), il est prévu un corps en forme de cuvette (34) susceptible d'être vissé de l'extérieur dans cet espace et qui, par sa face annulaire (35) tournée vers la douille (28), constitue la butée fermant le perçage d'étranglement (30) de la douille (28) lors de l'application de celle-ci sur cette butée, tandis que l'espace (36) dans le corps en forme de cuvette (34) sert à loger le ressort (24) sollicitant le cran d'arrêt (20), ainsi qu'à recevoir l'extrémité côté bandeau du cran d'arrêt (20).

6. Appareil de contrôle selon l'une des revendications précédentes, caractérisé en ce que le cran d'arrêt (20) est traversé jusqu'à la tête (23) de ce cran d'arrêt par un perçage longitudinal (37), par l'intermédiaire duquel l'espace (36) contenant le ressort (24) dans le corps en forme de cuvette (34) est en communication, au moyen de perçages transversaux (38) dans la tête (23) du cran d'arrêt, avec le retour (39) au réservoir.

6